# FASCICULE DE BREVET EUROPEEN

(11) **EP 0 447 296 B1**
(45) Date de publication et mention de la délivrance du brevet: **08.06.1994**
(21) Numéro de dépôt: 91400604.4
(22) Date de dépôt: 05.03.1991
(51) Int. Cl.: A01F 25/20

(54) **Dispositif pour désiler et charger notamment une benne telle qu'une remorque agricole et benne comportant ce dispositif**
Vorrichtung zum Entnehmen von Silage und zum Beladen eines Wagens
Device for unloading silage and for loading a trailer

(30) Priorité: 05.03.1990 FR 9002989
(43) Date de publication de la demande: 18.09.1991
(73) Titulaire: Belair, Pierre, F-35133 Parigne (FR)
(72) Inventeur: Belair, Pierre, F-35133 Parigne (FR)
(74) Mandataire: Hammond, William

(56) Documents cités:
- EP-A- 0 331 950
- DE-A- 1 531 933
- DE-A- 2 647 469
- DE-A- 3 605 564
- DE-A- 3 837 509
- DE-U- 9 011 408
- FR-A- 2 553 619
- FR-A- 2 591 420
- FR-A- 2 625 644
- US-A- 2 755 092
- US-A- 3 961 718

## Description

La présente invention concerne un dispositif pour désiler et charger notamment une benne telle qu'une remorque agricole, ainsi qu'une benne comportant ce dispositif.

On connaît déjà un grand nombre d'appareils pour désiler et charger une remorque agricole. A titre d'exemple on citera ceux décrits dans les documents US-A-2.755.092 et US-A-3.961.718

Le premier de ces documents est relatif à une pelle chargeuse dont le godet est muni à son extrémité avant d'un rouleau à ailettes qui, d'une part, attaque le front du silo et, d'autre part, propulse l'ensilage découpé dans le godet. Le godet plein est déversé dans une trémie ou une remorque agricole par exemple.

Le document US-A-3.961.718 concerne, quant à lui, un appareil pour désiler et charger la remorque à l'arrière de laquelle il peut glisser verticalement le long de deux glissières. Il comporte notamment un déflecteur oblique dont la partie inférieure est au contact du front de coupe et un rouleau muni d'ailettes projettant l'ensilage du bas vers le haut contre le déflecteur et en direction de la remorque.

Ce dispositif présente deux inconvénients majeurs : d'une part, du fait de la projection de l'ensilage il provoque une propagation de certains constituants préjudiciables à la bonne qualité de produits agricoles situés dans le voisinage et, d'autre part, il n'assure pas un dégagement parfait du pied du silo entraînant par la même une perte de matières ensilées. Enfin, ces dispositifs de l'art antérieur ne peuvent nullement constituer une paroi arrière d'une benne telle qu'une remorque agricole.

Aussi la présente invention a-t-elle notamment pour but de fournir un dispositif pour désiler et charger une benne telle qu'une remorque agricole en réduisant au maximum les projections.

Un autre but de l'invention est de fournir un tel dispositif qui constitue également une paroi arrière d'une remorque.

Ces buts, ainsi que d'autres qui apparaîtront par la suite, sont atteints par un dispositif du genre ci-dessus qui comprend, en premier lieu, un châssis muni de deux glissières et, en second lieu, un chariot glissant le long de ces glissières et comportant un rotor sensiblement perpendiculaire aux glissières, lequel dispositif est caractérisé, selon la présente invention, par le fait qu'il comprend, en troisième lieu, une plaque mobile selon une direction perpendiculaire à la surface et montée à l'extrémité de vérins dont l'autre extrémité est solidaire du châssis, cette plaque étant disposée en arrière des glissières par rapport au chariot.

Avantageusement, à la partie inférieure des glissières, est disposé un ensemble de dents situées dans le même plan que celles-là.

De préférence, le sens de rotation du rotor est tel que le produit est propulsé du bas vers le haut. La plaque mobile se déplace parallèlement aux glissières entre une position haute dans laquelle elle dégage au maximum l'espace entre ces glissières, et une position basse dans laquelle elle est située en arrière des dents,

Le dispositif selon la présente invention peut comporter une plaque déflectrice disposée en avant du rotor et mobile autour d'un axe parallèle au rotor.

La présente invention concerne également une benne à une extrémité de laquelle est situé le dispositif décrit ci-dessus, le châssis de celle-ci étant monté pivotant à une extrémité d'un bras, dont l'autre extrémité est située sur la benne.

Avantageusement, un premier vérin est disposé entre le châssis et le bras de façon à faire pivoter le premier entre deux positions obliques sensiblement symétriques par rapport à la verticale; un second vérin est disposé entre la benne et le bras avant afin de le faire pivoter autour de son extrémité située sur la benne.

La description qui va suivre et qui ne présente aucun caractère limitatif doit être lue en regard des figures annexées parmi lesquelles :
- la figure 1 représente, en vue de côté, un dispositif selon la présente invention,

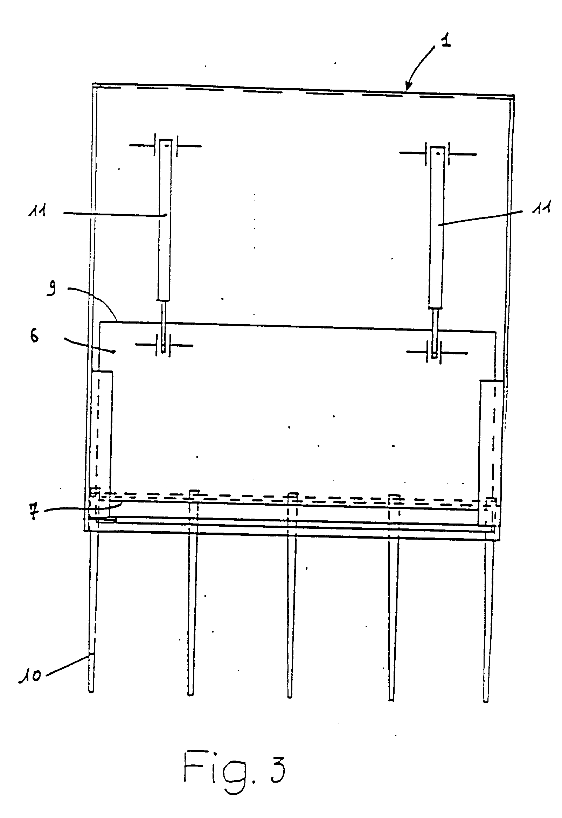

- la figure 2 est une vue arrière de ce même dispositif,
- la figure 3 correspond à la figure 2 lorsque la partie inférieure du dispositif est dégagé,
- la figure 4 représente, en vue de côté, une benne telle qu'une remorque munie du dispositif selon l'invention en cours de désilage,
- la figure 5 représente, en vue de côté, le même dispositif en chargement de la benne,
- la figure 6 représente, en vue de côté, une benne munie du dispositif en position pour charger une balle de paille,
- la figure 7 représente en vue de côté, l'objet de la figure 6, la balle de paille étant chargée dans la benne, et,
- la figure 8 représente en vue de côté, la benne comportant le dispositif en position de fermeture de celle-ci.

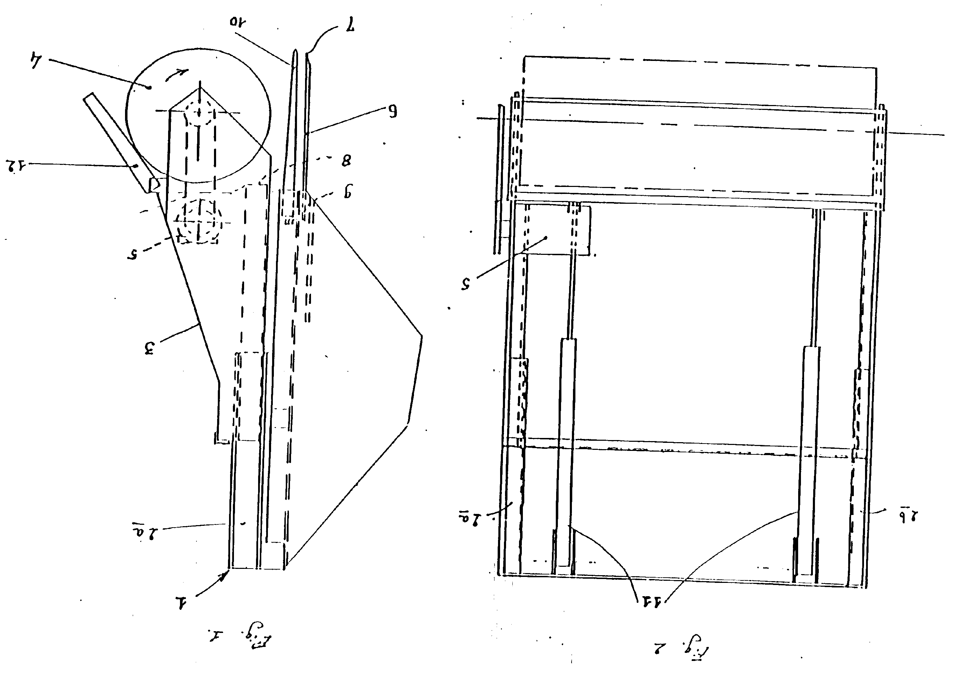

Ainsi qu'on peut le voir sur la figure 1, un dispositif pour désiler et charger une benne telle qu'une remorque agricole comprend un châssis 1 muni de deux glissières 2a et 2b. Sur ce châssis 1 est monté mobile entre ces deux glissières un chariot 3 qui comporte un rotor 4 sensiblement perpendiculaire à ces glissières 2a et 2b. Le chariot est entraîné par un moteur 5 disposé sur le châssis, comme ceci est connu de l'homme du métier.

Selon le présent exemple de réalisation le rotor est une vis hélicoïdale à filets droits et gauches munis de section et tournant dans un sens tel que le produit désilé soit projeté dans une benne du bas vers le haut, comme ceci sera expliqué ci-après .

Le châssis 1 comporte, à son extrémité inférieure, une plaque mobile 6 qui est mobile entre une position haute dans laquelle son bord inférieur 7 est sensiblement au même niveau que le bord inférieur 8 des glissières 2a et 2b, et une position basse dans laquelle le bord supérieur 9 de cette plaque 6 est sensiblement au même niveau que le bord inférieur 8 de ces mêmes glissières. Pour ce faire, le châssis comporte une paire de verins élévateurs 11 dont une extrémité est fixée sur le châssis et l'autre sur la plaque mobile 6. Le bord inférieur 7 de la plaque mobile 6 peut être avantageusement coupant.

Entre cette plaque mobile 6 et le rotor 4, le châssis 1 comporte des dents 10 qui serviront notamment à la préhension de balles de paille.

Ce dispositif peut également comporter une plaque de protection 12 située devant le rotor 4, de façon connue, afin d'assurer une sécurité pour l'utilisateur.

La présente invention concerne également une benne telle qu'une remorque agricole comportant un dispositif tel que décrit précédemment.

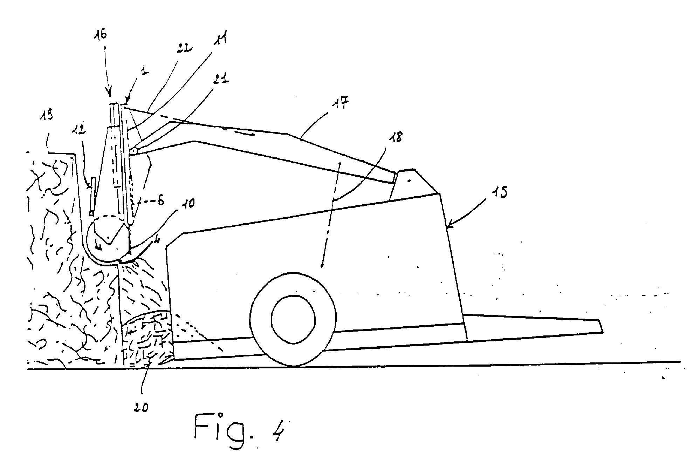

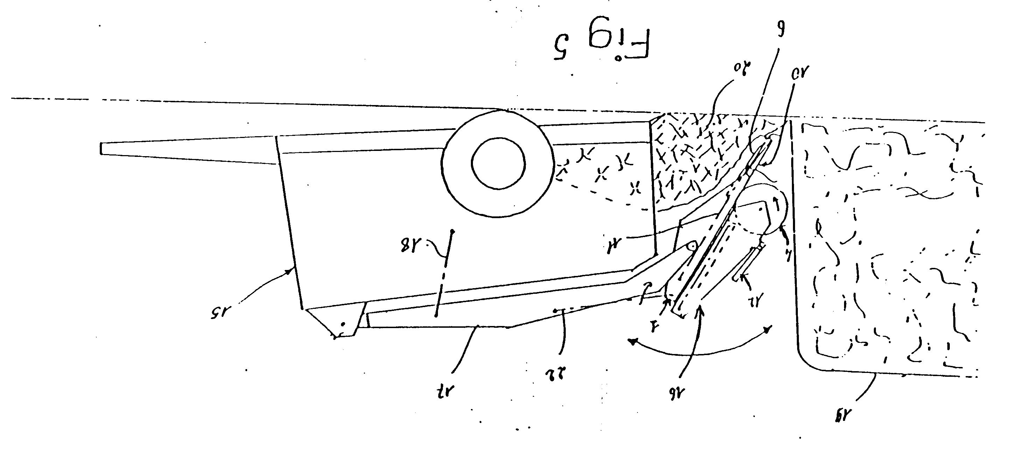

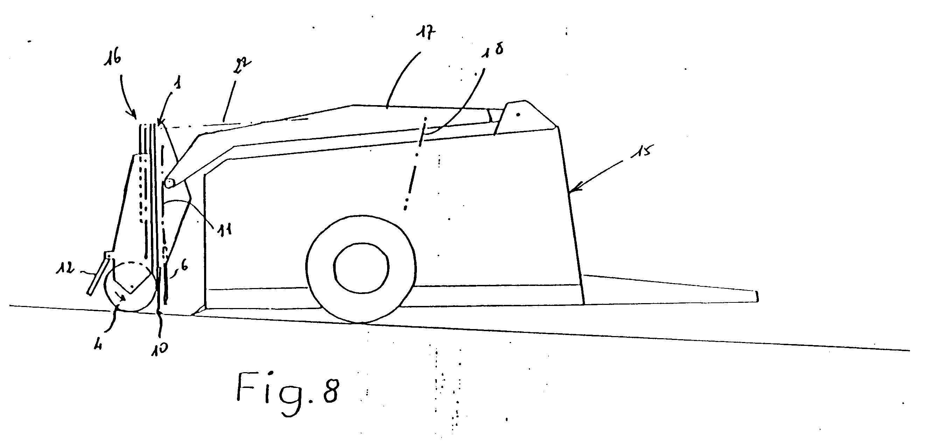

Ainsi qu'on peut notamment le voir sur les figures 4 à 8, une benne 15 qui est, selon cet exemple de réalisation, une remorque agricole, comporte à sa partie arrière un dispositif tel que décrit précédemment désigné dans son ensemble par la référence 16.

Ce dispositif 16 est fixé mobile à l'extrémité des bras 17 dont l'autre extrémité est fixée mobile sur la benne 15. Ces bras 17 sont mus en rotation par des vérins 18 situés de part et d'autre de la benne 15 afin d'élever et de descendre le châssis par rapport à la benne 15 verticalement le long du front de coupe d'un silo 19 : le rotor 4 propulse l'ensilage dans la benne du bas vers le haut. Dans cette opération la plaque mobile 6 est en position haute.

Ainsi qu'on peut le voir sur les figures, le dispositif 16 est dans cette opération de désilage éloigné de la benne 15 et est situé sensiblement verticalement c'est-à-dire parallèlement au front de coupe.

Quant le rotor 4 est au niveau du bas du silo 19, un tas 20 d'ensilage se trouve être localisé juste en arrière de la benne 15.

Le châssis 1 mobile autour des axes 21 à l'extrémité des bras 17, est incliné par l'intermédiaire de vérin 22 et la plaque mobile 6 est abaissée : en ramenant le châssis vers la benne 15, la plaque mobile 6 ratisse le tas 20 d'ensilage et le pousse dans la benne 15; une fois à l'arrière de la benne 15, par action des vérins 19 et 22, le dispositif 16 est appliqué contre la benne et constitue la paroi arrière de celle-ci.

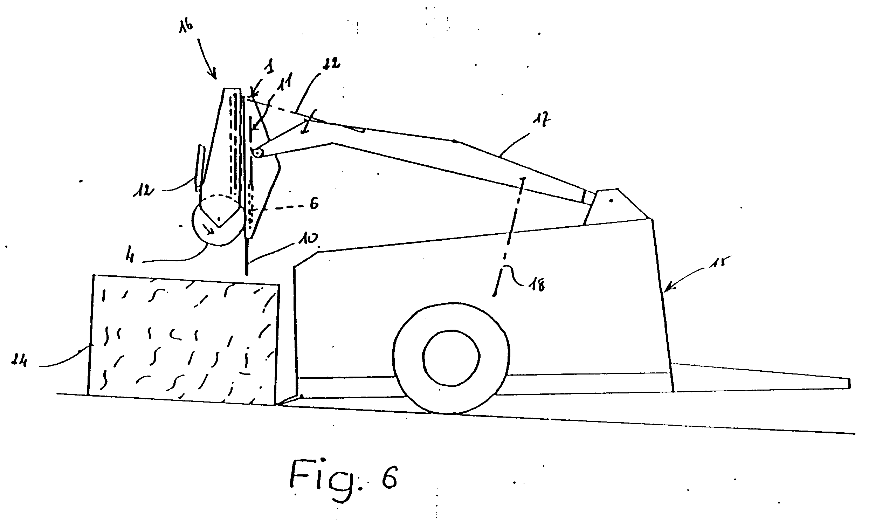

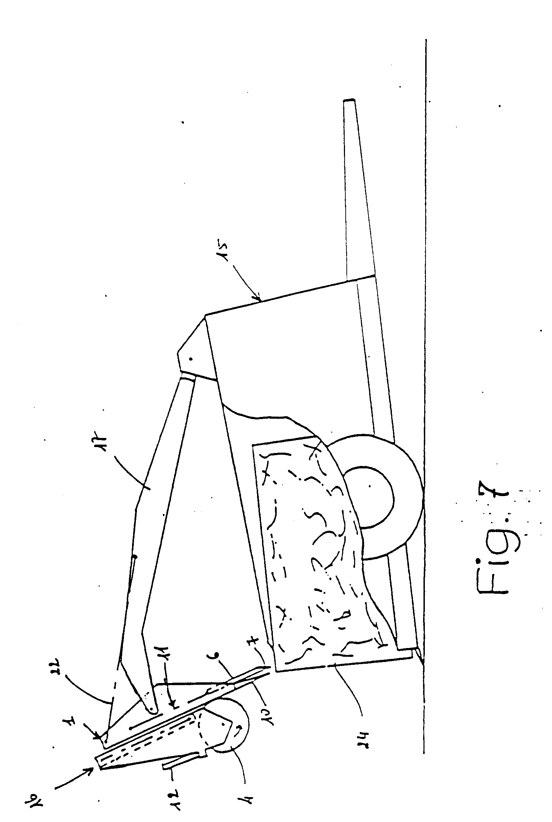

On peut également utiliser la présente invention pour monter une balle de paille dans une enceinte 15 comme représenté aux figures 6 et 7.

La plaque mobile 6 est en position haute. En plantant les dents dans une balle de paille 24, on peut ainsi, en jouant sur les verins 19 et 22, déplacer cette balle de paille 24 vers et dans la benne 15. Si on abaisse la plaque mobile 6, une fois la balle de paille dans la benne, celle-ci par son bord inférieur 7 peut couper les ficelles maintenant la balle.

## Revendications

1. Dispositif pour désiler et charger notamment une benne telle qu'une remorque agricole comprenant, en premier lieu, un châssis (1) muni de deux glissières (2a, 2b) et, en second lieu, un chariot (3) glissant le long desdites glissières (2a, 2b) et comportant un rotor (4) sensiblement perpendiculaire auxdites glissières, caractérisé par le fait qu'il comprend, en troisième lieu, une plaque (6) mobile selon une direction perpendiculaire à sa surface et montée à l'extrémité de vérins (11) dont l'autre extrémité est solidaire dudit châssis (1), ladite plaque (6) étant disposée en arrière desdites glissières (2a, 2b) par rapport audit chariot (3).

2. Dispositif selon la revendication 1, caractérisé par le fait qu 'à la partie inférieure des glissières (2a, 2b) est disposé un ensemble de dents (10) situé dans le même plan que celles-la.

3. Dispositif selon les revendications 1 ou 2, caractérisé par le fait que la plaque mobile (6) est déplaçable, grâce à des vérins (11) parallèlement aux glissières (2a, 2b) entre une position haute dans laquelle son bord inférieur (7) est sensiblement au même niveau que le bord inférieur (8) desdites glissières (2a, 2b), et une position basse dans laquelle le bord supérieur (9) de ladite plaque (6) est sensiblement au même niveau que le bord inférieur (8) desdites glissières.

4. Dispositif selon l'une quelconque des revendications 1 à 3, caractérisé par le fait qu'il comporte une plaque de protection (12) disposée en avant du rotor (4) et mobile autour d'un axe parallèle audit rotor.

5. Benne telle qu'une remorque agricole, caractérisée par le fait qu'elle comporte un dispositif selon l'une quelconque des revendications 1 à 4, le châssis (2) dudit dispositif (16) étant monté pivotant à une extrémité d'au moins un bras (17), dont l'autre extrémité est située sur ladite benne (15).

6. Benne selon la revendication 5, caractérisée par le fait qu'un premier vérin (22) est disposé entre le bras de façon à faire pivoter le premier entre deux positions obliques sensiblement symétriques par rapport à la verticale et qu'un second vérin (18) est disposé entre la benne et le bras afin de le faire pivoter autour de son extrémité située sur la benne (15).

## Patentansprüche

1. Gerät zur Siloentleerung und Beladung insbesondere eines Kippwagens, so wie ein landwirtschaftlicher Anhänger, der erstens aus einem Rahmen (1) mit zwei Gleitschienen (2a, 2b) und zweitens aus einem Schlitten (3), der die genannten Gleitschienen (2a, 2b) entlang gleitet und einen Rotor (4) hat, der zu den genannten Gleitschienen genau senkrecht steht, besteht und dadurch gekennzeichnet ist, daß es drittens ein Blech (6) hat, das senkrecht zu seiner Oberfläche beweglich ist und am Ende von Hubzylindern (11) angebracht ist, deren anderes Ende Bestandteil des genannten Rahmens (1) ist, wobei das genannte Blech (6) in Bezug auf den genannten Rahmen (3) hinter den genannten Gleitschienen (2a, 2b) sitzt.

2. Gerät entsprechend Anspruch 1, dadurch gekennzeichnet, daß sich am unteren Teil der Gleitschienen (2a, 2b) eine Reihe von Zähnen (10) befindet, die auf der gleichen Ebene wie die Gleitschienen sitzen.

3. Gerät entsprechend Anspruch 1 oder 2, dadurch gekennzeichnet, daß das bewegliche Blech (6) mit Hilfe der Hubzylinder (11) parallel zu den Gleitschienen (2a, 2b) zwischen einer oberen Position, in der seine Unterkante (7) auf genau der gleichen Höhe wie die Unterkante (8) der genannten Gleitschienen (2a, 2d) ist, und einer unteren Position, in der die Oberkante (9) des genannten Blechs (6) auf genau der gleichen Höhe wie die Unterkante (8) der genannten Gleitschienen ist, verschoben werden kann.

4. Gerät entsprechend einem der Ansprüche 1 bis 3, dadurch gekennzeichnet, daß es ein Schutzblech (12) besitzt, das vor dem Rotor (4) sitzt und um eine Achse beweglich ist, die parallel zu dem genannten Rotor verläuft.

5. Kippwagen, sowie ein landwirtschaftlicher Anhänger, dadurch gekennzeichnet, daß er mit einem Gerät entsprechend einem der Ansprüche 1 bis 4 ausgestattet ist, wobei der Rahmen (2) des genannten Geräts (16) drehbar am Ende von mindestens einem Arm (17) angebracht ist, dessen anderes Ende sich auf dem genannten Kippwagen (15) befindet.

6. Kippwagen entsprechend Anspruch 5, dadurch gekennzeichnet, daß ein erster Hubzylinder (22) zwischen dem Arm in der Weise vorgesehen ist, daß der erstere zwischen zwei schrägen Positionen drehbar ist, die in Bezug auf die Vertikale symmetrisch sind, und daß ein zweiter Hubzylinder (18) zwischen dem Kippwagen und dem Arm vorgesehen ist, damit dieser sich um dasjenige seiner Enden drehen kann, das auf dem Kippwagen (15) montiert ist.

## Claims

1. A device for silage removal and loading especially of a container such as an agricultural trailer comprising, firstly, a frame (1) provided with two slides (2a, 2b) and, secondly, a carriage (3) which slides along the said slides (2a, 2b) and comprises a rotor (4) substantially perpendicular to the said slides, characterised in that it comprises, thirdly, a plate (6) which is movable along a direction perpendicular to its surface and is mounted at the end of jacks (11), the other end of which is integral with the said frame (1), the said plate (6) being arranged behind the said slides (2a, 2b) in relation to the said carriage (3).

2. A device according to Claim 1, characterised in that in the lower part of the slides (2a, 2b) there is arranged a set of teeth (10) situated in the same plane as the former.

3. A device according to Claim 1 or Claim 2, characterised in that the movable plate (6) is displaceable, by means of the jacks (11), parallel to the slides (2a, 2b) between an upper position, in which its lower edge (7) is substantially at the same level as the lower edge (8) of the said slides (2a, 2b), and a lower position in which the upper edge (9) of the said plate (6) is substantially at the same level as the lower edge (8) of the said slides.

4. A device according to any one of Claims 1 to 3, characterised in that it comprises a protective plate (12) arranged in front of the rotor (4) and movable about an axis parallel to the said rotor.

5. A container such as an agricultural trailer, characterised in that it comprises a device according to any one of Claims 1 to 4, the frame (2) of the said device (16) being pivotably mounted at one end of at least one arm (17), the other end of which is situated on the said container (15).

6. A container according to Claim 5, characterised in that a first jack (22) is arranged between the arm so as to cause the first to pivot between two oblique positions substantially symmetrical in relation to the vertical and that a second jack (18) is arranged between the container and the arm so as to cause it to pivot about its end situated on the container (15).
